# FASCICULE DE BREVET EUROPEEN

(11) **EP 2 592 390 B1**
(45) Date de publication et mention de la délivrance du brevet: **06.07.2016**
(21) Numéro de dépôt: 12191900.5
(22) Date de dépôt: 09.11.2012
(51) Int. Cl.: G01D 4/00

(54) **Système de mesure de grandeurs physiques, dispositif d'alimentation et procédé de configuration associés à un tel système de mesure**
System zum Messen von physikalischen Größen, entsprechende Stromversorgungsvorrichtung und entsprechendes Konfigurationsverfahren für ein solches Messsystem
System for measuring physical quantities, power supply device and configuration method associated with such a measuring system

(30) Priorité: 10.11.2011 FR 1160273
(43) Date de publication de la demande: 15.05.2013
(73) Titulaire: Schneider Electric Industries SAS, 92500 Rueil-Malmaison (FR)
(72) Inventeur: Contini, Erick, 38240 Meylan (FR); Houbre, Pascal, 38560 Jarrie (FR); Waterlot, Frédéric, 73190 ST Baldoph (FR); Moreux, Alain, 21000 Dijon (FR); Clemence, Michel, 73000 Chambery (FR)
(74) Mandataire: Myon, Gérard Jean-Pierre

(56) Documents cités:
- WO-A1-96/20618
- FR-A- 1 478 330
- US-B1- 6 671 635
- US-B2- 7 831 702

## Description

La présente invention concerne un système de mesure comprenant un bloc de traitement et un ensemble de dispositif(s) de mesure de grandeurs physiques connecté au bloc de traitement, dans lequel :
- le bloc de traitement est adapté pour recueillir des mesures de grandeurs physiques effectuées par ledit ensemble et comporte des moyens de télécommunication d'informations déterminées en fonction desdites mesures, à destination d'un module extérieur,
- le bloc de traitement comporte des premiers moyens de réception d'une alimentation électrique du bloc de traitement générée à l'aide d'au moins une grandeur physique mesurée par l'ensemble de dispositif(s) de mesure.

Un tel système de mesure, par exemple décrit dans le document US 7 831 702, permet de mesurer des caractéristiques physiques et de les transmettre à une entité chargée de les collecter.

Un dispositif de mesure comporte, par exemple, des transformateurs de courant à disposer autour d'un conducteur traversé par un courant électrique à mesurer. Ils sont aptes d'une part à mesurer ce courant, et d'autre part à fournir un courant électrique généré à partir du courant électrique mesuré aux premiers moyens de réception d'alimentation électrique du bloc de traitement, pour alimenter le bloc de traitement.

Toutefois, cette alimentation électrique du bloc de traitement ne peut avoir lieu que lorsque du courant circule dans le conducteur et que le transformateur de courant est disposé autour du conducteur.

Or il peut être nécessaire de devoir alimenter le bloc de traitement, pour notamment réaliser des opérations de configuration, alors que ces conditions ne sont pas réunies.

A cet effet, suivant un premier aspect, l'invention a pour objet un système de mesure selon la revendication 1.

Un tel système permet ainsi au bloc de traitement de réaliser des opérations de configuration nécessitant une alimentation électrique du bloc de traitement alors même qu'il n'est pas en mesure d'être alimenté à l'aide de l'alimentation électrique telle que générée pendant le fonctionnement nominal des dispositifs de mesure.

Dans des modes de réalisation, le système de mesure est selon l'une quelconque des revendications 2 à 12.

Suivant un deuxième aspect, l'invention a pour objet un procédé de configuration selon l'une quelconque des revendications 13 à 16.

L'invention sera mieux comprise à la lecture de la description qui suit et à l'examen des figures qui l'accompagnent. Ces figures sont données à titre illustratif, mais nullement limitatif, de l'invention. Ces figures sont les suivantes :
- la figure 1 est une vue en perspective d'un système de mesure dans un mode de réalisation de l'invention ;
- la figure 2 est un schéma-bloc du système de mesure de la figure 1 ;
- la figure 3 représente une vue en perspective d'un dispositif d'alimentation dans un mode de réalisation de l'invention ;
- la figure 4 est une vue à plus grande échelle d'une extrémité du dispositif d'alimentation de la figure 3 ;
- la figure 5 représente une étape en vue de l'introduction du dispositif d'alimentation de la figure 3 dans le bloc de traitement dans un mode de réalisation de l'invention ;
- la figure 6 est une vue d'un schéma électrique du dispositif d'alimentation et du système de mesure dans un mode de réalisation de l'invention ;
- la figure 7 est une vue d'un schéma électrique du dispositif d'alimentation et du système de mesure dans un autre mode de réalisation de l'invention.

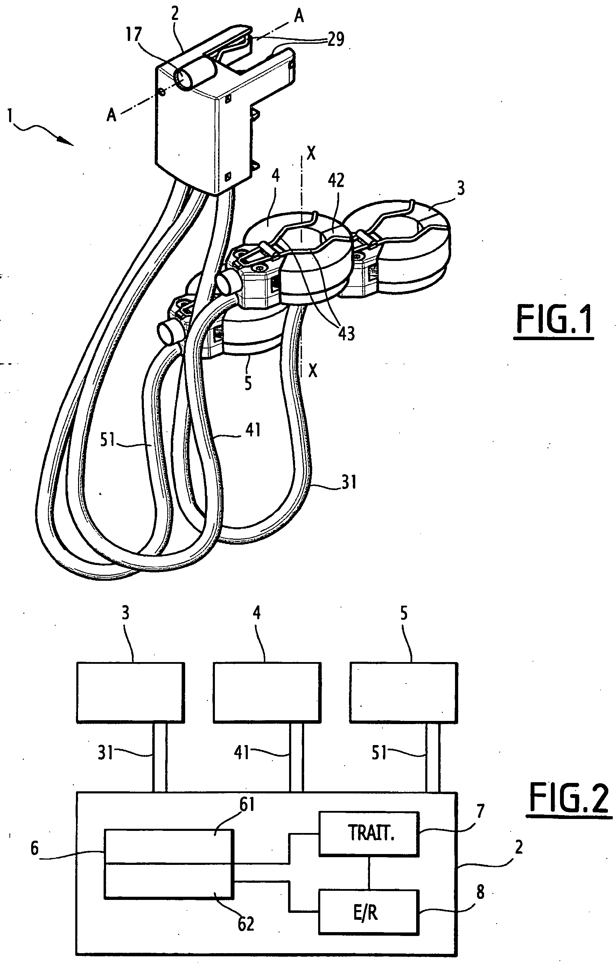

La figure 1 est une vue en perspective d'un système de mesure 1 dans un mode de réalisation de l'invention. Ce système de mesure est, dans le cas considéré, destiné à recueillir des mesures de courant de chaque phase d'un réseau triphasé.

La figure 2 représente un schéma-bloc de ce système de mesure 1.

Le système de mesure comporte un bloc de traitement 2 relié à trois dispositifs de mesure du courant 3, 4, 5.

Dans le mode de réalisation considéré, chaque dispositif de mesure de courant est adapté pour être installé de manière à encercler un câble électrique d'une phase respective du réseau triphasé, le câble étant traversé par le courant à mesurer.

En référence au dispositif 4, lors de son installation sur le câble qui lui est associé, ce dispositif 4 sera ouvert au niveau de la zone 42, par rotation dans le plan dans lequel s'étend le dispositif, de manière à disposer le câble selon l'axe XX au sein de la pince 43 adaptée pour maintenir le câble, puis le dispositif de mesure 4 sera refermé.

L'avantage d'un tel dispositif de mesure est de pouvoir être installé sur un câble sans avoir à interrompre la distribution d'énergie électrique dans le câble.

Dans le mode de réalisation considéré, le fonctionnement des dispositifs de mesure 3 et 5 est similaire à celui du dispositif de mesure 4.

Chaque dispositif de mesure 3, 4, 5 est relié par une liaison filaire respective 31, 41, 51 au bloc 2.

Chaque liaison 31, 41, 51 est adaptée pour transmettre depuis le dispositif de mesure respectif 3, 4, 5, un signal de mesure et un signal d'alimentation électrique.

Dans le cas présent, chaque dispositif de mesure comprend deux transformateurs de courant adaptés chacun pour délivrer un signal respectif généré en fonction du courant traversant le câble électrique autour duquel ils sont disposés.

Un de ces transformateurs de courant est par exemple un enroulement de Rogowsky, par exemple décrit dans le document FR 1 478 330 ou US 2006/0232263, qui délivre une tension induite dans le transformateur par le champ magnétique généré par le courant traversant le câble, à partir de laquelle une mesure de ce courant peut être obtenue, par intégration, par exemple à l'aide d'une résistance en série avec une capacité.

L'autre de ces transformateurs de courant est par exemple composé d'un circuit magnétique comportant un bobinage délivrant un courant induit dans ce transformateur par le champ magnétique généré par le courant traversant le câble. Ce signal électrique est destiné à l'alimentation électrique du bloc de traitement 2.

Chaque dispositif de mesure 3, 4, 5 est adapté pour mesurer en permanence le courant sur le câble qui leur est respectivement associé. Ces mesures et le signal d'alimentation électrique généré au niveau de chaque dispositif de mesure 3, 4, 5 sont transmis au bloc de traitement 2 par la liaison le reliant au bloc 2, respectivement 31, 41, 51.

Le bloc de traitement 2 représenté en figure 2 comporte un module d'alimentation 6, un module de traitement 7 et un module d'émission/réception radiofréquence 8, par exemple de technologie ZigBee.

Le module d'alimentation 6 comprend un sous-module d'alimentation réseau 61 et un sous-module d'alimentation provisoire 62.

Le sous-module d'alimentation réseau 61 est adapté pour recevoir les signaux d'alimentation électrique transmis par les dispositifs de mesure 3, 4, 5 pendant leur fonctionnement opérationnel, réaliser une adaptation de ces signaux de manière à alimenter électriquement le bloc de traitement 2 à l'aide de ces signaux adaptés.

Le sous-module d'alimentation provisoire 62 est adapté pour recevoir un signal d'alimentation fourni par un dispositif d'alimentation extérieur de la manière décrite plus bas, notamment durant une étape d'installation/configuration du système de mesure 1 et pour réaliser une adaptation de ce signal de manière à alimenter électriquement le bloc de traitement 2 à l'aide de ce signal adapté.

Le module de traitement 7 est adapté pour piloter le fonctionnement du bloc de traitement 2, durant la phase de configuration du système de mesure et pendant son fonctionnement opérationnel. Il traite les mesures transmises par les dispositifs de mesure (par exemple en effectuant des opérations de moyennage, de lissage etc) et en extrait des informations de mesure avant de les transmettre par l'intermédiaire du module d'émission/réception 8 à destination d'un module électronique récepteur distant (RTU) chargé de collecter les informations de mesure qui lui sont adressées par plusieurs systèmes de mesure.

Le module de traitement 7 comporte notamment un microprocesseur et une mémoire stockant des données et des instructions logicielles destinées à s'exécuter sur le microprocesseur.

Généralement, les ensembles de câbles sur lesquels installer le système de mesure sont très serrés, notamment lorsqu'ils sont situés au niveau d'un départ de tableau électrique.

Lors de l'installation du système de mesure 1 sur les câbles, si les dispositifs de mesure ne sont pas encore installés sur les câbles ou si le courant ne passe alors pas dans les câbles, l'alimentation électrique en provenance des câbles ne peut alors pas être fournie au bloc de traitement 2 par les dispositifs de mesure.

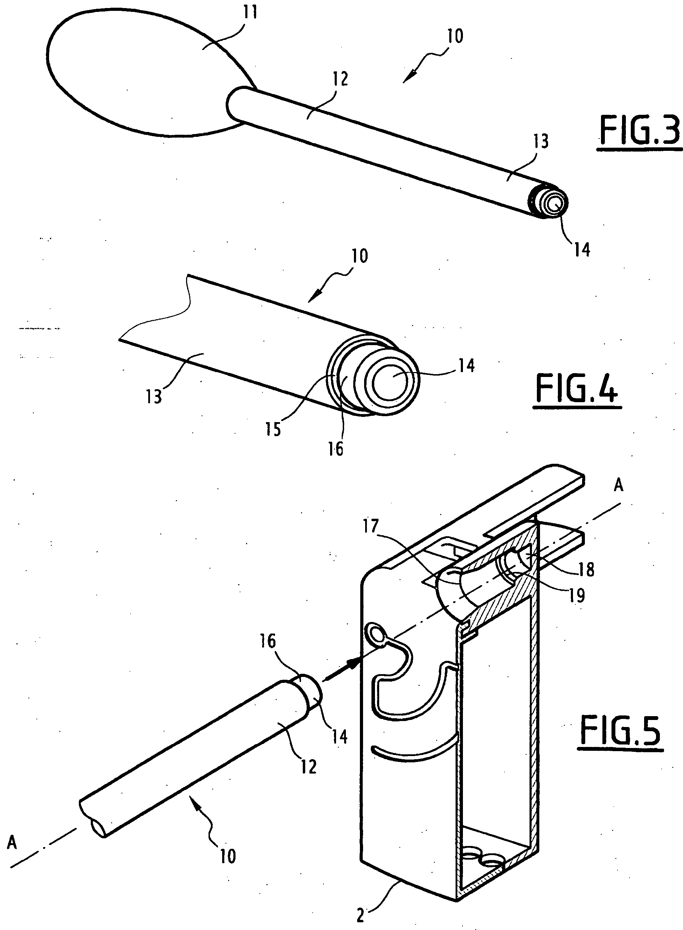

Dans un mode de réalisation de l'invention, lors de la phase d'installation et/ou de configuration, le technicien en charge de l'installation utilise un dispositif d'alimentation 10 du type représenté en figure 3. La figure 4 représente une vue agrandie d'une extrémité du dispositif d'alimentation 10.

Le dispositif d'alimentation 10 comprend une poignée 11 destinée à la préhension par le technicien. La poignée 11 est prolongée par une tige 12 dont l'extrémité opposée à la poignée comporte deux cylindres concentriques 13, 14.

Le cylindre concentrique extérieur 13 se termine par un filetage 15, et une partie 16 du cylindre intérieur 14 fait saillie au-delà du filetage 15.

Le dispositif d'alimentation 10 comprend des moyens pour générer un signal d'alimentation électrique, par exemple une pile. Lorsque ces moyens sont en oeuvre, une différence de potentiel s'établit entre le filetage 15 du cylindre extérieur 13 et la saillie 16 du cylindre intérieur 14. Par exemple, la masse correspond au filetage 15, et le potentiel positif à la saillie 16.

L'extérieur du dispositif d'alimentation est en matériau isolant, par exemple plastique, excepté le filetage 15 et la saillie 16 qui doivent être conducteurs et sont reliés chacun par un fil conducteur à une borne distincte de la pile

Dans le mode de réalisation considéré, la pile est disposée dans le manche.

En référence à la figure 5 qui est une vue en perspective d'une coupe du boîtier extérieur du bloc de traitement 2 selon la ligne AA indiquée en figure 1, le bloc de traitement 2 comporte un logement 17 présentant une ouverture sur le devant du bloc 2. Ce logement 17 est adapté pour réceptionner de façon ajustée l'extrémité du dispositif d'alimentation 10 située à l'opposée de la poignée 11. Pour ce faire, cette extrémité est introduite dans le logement 17 selon l'axe AA le long duquel s'étend la tige 12 du dispositif d'alimentation.

Une fois l'extrémité du dispositif d'alimentation 10 correctement réceptionnée dans le logement 17 du bloc de traitement 2, un premier élément 18 conducteur du bloc de traitement 2 est adapté pour être en contact avec la saille 16 du dispositif d'alimentation 10, tandis qu'un deuxième élément 19 conducteur du bloc de traitement 2 est adapté pour être en contact avec le filetage 15 du dispositif d'alimentation 10.

Ces deux éléments 18, 19 sont connectés au sous-module d'alimentation provisoire 62 et lui délivrent ainsi un signal d'alimentation électrique.

Dans le mode de réalisation considéré, ce deuxième élément 19 du bloc de traitement 2 comporte un filetage adapté pour être solidarisé avec le filetage 15 par vissage du filetage 15 du dispositif d'alimentation lorsque la poignée 11 est tournée par le technicien.

Dans un mode de réalisation, lorsque le bloc de traitement 2 est ainsi alimenté par le dispositif de traitement 10, le bloc de traitement 2 est adapté pour transmettre à destination du RTU l'adresse, selon le protocole ZigBee de radiocommunication, du bloc de traitement 2. Cette opération de configuration correspond à une déclaration par le bloc de traitement 2 auprès du RTU, qui saura ainsi lui répondre et/ou identifier la provenance d'informations de mesure ultérieures transmises par le bloc de traitement 2.

Dans un mode de réalisation, le dispositif d'alimentation 10 comporte une diode électroluminescente ou LED (de l'anglais « Light-Emitting Diode »), non représentée sur les figures 1 à 5. Lorsque le dispositif d'alimentation 10 est bien positionné dans le logement correspondant du bloc de traitement 2, de manière à permettre la fourniture du signal d'alimentation électrique au bloc de traitement, la LED s'allume.

Dans un mode de réalisation, suite à la réception par l'intermédiaire du module émetteur/récepteur 8 d'une réponse d'acquittement à la déclaration par bloc de traitement 2, cet acquittement indiquant la prise en compte de l'adresse, le bloc de traitement 2 est adapté pour faire clignoter la LED du dispositif d'alimentation vissé dans le bloc de traitement 2, de manière à avertir le technicien de la prise en compte par le RTU.

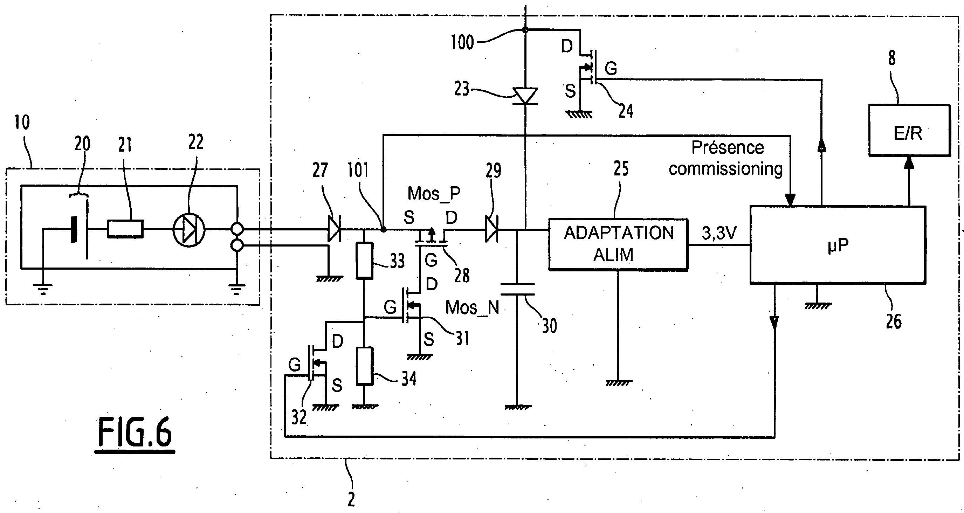

La figure 6 représente un schéma électrique de composants du bloc de traitement 2 et du dispositif d'alimentation 10 lorsqu'ils sont vissés l'un à l'autre.

Le dispositif d'alimentation 10 comporte une pile 20 de 9 Volts par exemple, en série avec une résistance 21 et une LED 22 visible depuis l'extérieur du dispositif d'alimentation 10, et fournit un signal d'alimentation en entrée de la diode 27 du bloc de traitement 2.

Le signal d'alimentation fourni par un et/ou plusieurs des dispositif(s) de mesure 3, 4, 5 est reçu par le bloc de traitement 10 au point électrique 100, après passage par des ponts redresseurs. Le transistor 24 en parallèle de la diode 23 permet de réguler, évitant ainsi qu'il ne prenne de trop fortes amplitudes, le signal d'alimentation électrique ainsi fourni à l'adaptateur d'alimentation 25.

Cet adaptateur d'alimentation 25 permet adapter les signaux d'alimentation électrique pour alimenter les différents éléments du bloc de traitement nécessitant une alimentation électrique, parmi lesquels par exemple le microprocesseur 26 du module de traitement 7, le module d'émission/réception radiofréquence 8. En particulier, il est adapté pour fournir une tension de 3,3 V au microprocesseur 26, pilotant les traitements.

Les transistors 28 et 31 permettent la dérive du courant depuis la diode 27 et contribuent avec la diode 29 et la capacité 30 à fournir une tension stabilisée à l'adaptateur d'alimentation 25.

Le bloc de traitement 2 comprend des résistances 33, 34.

Dans un mode de réalisation, lorsqu'une tension d'alimentation est appliquée par le dispositif d'alimentation 10, elle est détectée par une fonction logicielle pilotée par le microprocesseur 26 testant le potentiel du point électrique 101, qui déclenche alors les opérations de déclaration de l'adresse du bloc de traitement 2 auprès du RTU.

Le transistor 32 sous pilotage par le microprocesseur 26 par un signal de passage en mode pulsé après réception du message d'acquittement du RTU, permet de faire clignoter la LED 22.

Le clignotement de la LED 22, attestant l'alimentation du bloc de traitement 2 par le dispositif d'alimentation 10, est piloté, dans le mode de réalisation représenté en figure 6, par le microprocesseur 26 via le transistor 32.

Le dispositif d'alimentation 10 permet en outre, lorsqu'il est vissé dans le bloc de traitement 2, le déplacement et le positionnement par un technicien du bloc de traitement 2 sur un câble, par exemple en insérant le câble au sein de deux bras 29 représentés en figure 1 destinés à permettre le maintien du bloc au câble, lors de la phase d'installation, en le protégeant d'une électrocution due à la présence éventuelle de potentiels électriques dangereux sur le câble sur lequel installer le dispositif d'alimentation ou sur des câbles environnants.

Le mode de réalisation de l'invention décrit permet ainsi de fournir, à l'aide d'un dispositif d'alimentation utilisé de manière temporaire, notamment dans une phase d'installation, l'alimentation électrique nécessaire à la configuration du bloc de traitement lorsque les dispositifs de mesure ne sont pas aptes à fournir l'alimentation électrique au bloc à partir de courant circulant dans les câbles du réseau triphasé.

Dans un mode de réalisation, le dispositif d'alimentation contribue, outre à l'alimentation électrique, au bon positionnement du bloc, et il garantit la sécurité du technicien qui le manipule, vis-à-vis des potentiels dangereux qui peuvent être présents sur les câbles du réseau triphasé et/ou des câbles environnants.

Dans le mode de réalisation décrit, le dispositif d'alimentation est connecté au bloc de traitement par vissage pour fournir le signal d'alimentation électrique. D'autres types de connections peuvent être utilisés, par exemple de type à encastrement etc.

Dans le mode de réalisation décrit, le bloc de traitement 2 comprend un module d'émission/réception radiofréquence. L'invention peut néanmoins être mise en oeuvre avec une transmission des informations à destination du RTU par voie filaire.

Dans un autre mode de réalisation, le dispositif d'alimentation comporte, à la place de la pile, un générateur piézo-électrique générant de l'énergie électrique, permettant de générer un signal d'alimentation électrique par rotation de la poignée 11 lors du vissage du dispositif d'alimentation 10 dans le bloc de traitement 2.

Dans un autre mode de réalisation, la LED n'est pas située dans le dispositif d'alimentation 10, mais dans le bloc de traitement 2.

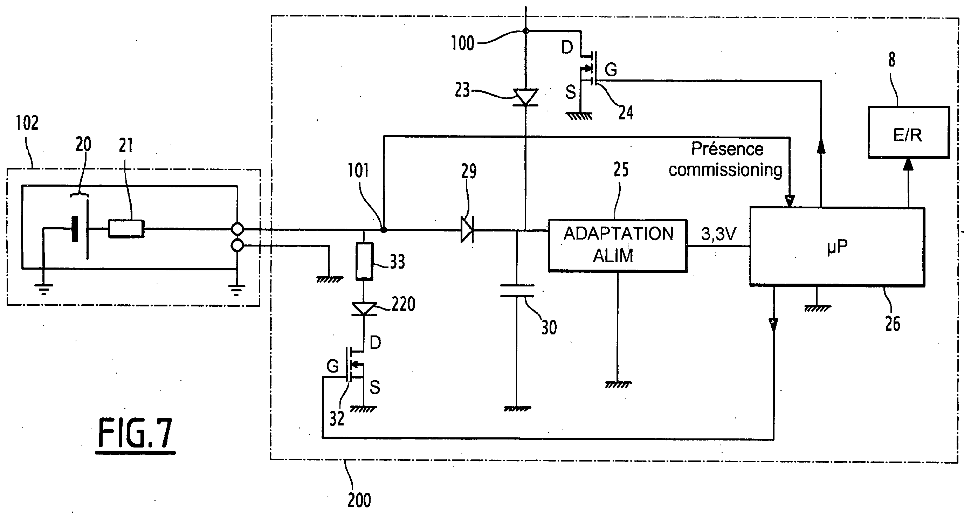

La figure 7 représente un schéma électrique de composants d'un bloc de traitement 200 et d'un dispositif d'alimentation 102 lorsqu'ils sont vissés l'un à l'autre dans un tel mode de réalisation.

Le bloc de traitement 200 est similaire au bloc de traitement 2 précédemment décrit, si ce n'est qu'il comporte une LED 220, qui est visible sur la face avant du bloc de traitement 200.

Le dispositif d'alimentation 102 est similaire au dispositif d'alimentation 10 précédemment décrit, si ce n'est qu'il ne comporte pas de LED 22.

Les éléments similaires sur les figures 6 et 7 portent les mêmes références.

Le clignotement de la LED 220, attestant l'alimentation du bloc de traitement 200 par le dispositif d'alimentation 102, est piloté, dans le mode de réalisation représenté en figure 7, par le microprocesseur 26.

## Revendications

1. Système de mesure (1) comprenant un bloc de traitement (2) et un ensemble de dispositif(s) (3, 4, 5) de mesure de grandeurs physiques connecté au bloc de traitement, dans lequel :
le bloc de traitement est adapté pour recueillir des mesures de grandeurs physiques effectuées par ledit ensemble et comporte des moyens de télécommunication (8) d'informations déterminées en fonction desdites mesures, à destination d'un module extérieur,
le bloc de traitement comporte des premiers moyens de réception (61) d'une alimentation électrique du bloc de traitement générée à l'aide d'au moins une grandeur physique mesurée par l'ensemble de dispositif(s) de mesure,
le système.de mesure étant **caractérisé en ce que** le bloc de traitement comporte en outre des deuxièmes moyens de réception (62) d'une alimentation électrique du bloc de traitement, distincts des premiers moyens de réception d'alimentation électrique,
lesdits deuxièmes moyens de réception d'alimentation électrique comportant un logement (17) pour recevoir un dispositif d'alimentation électrique (10) adapté pour fournir un signal d'alimentation électrique, le bloc de traitement étant adapté pour suite à la réception d'un dispositif d'alimentation électrique dans ledit logement, effectuer une opération de configuration du système, le bloc de traitement étant alimenté par les deuxièmes moyens de réception d'alimentation électrique.

2. Système de mesure (1) selon la revendication précédente, dans lequel l'opération de configuration du système comprend la transmission d'une adresse de télécommunication du bloc de traitement (2) à destination du module extérieur.

3. Système de mesure (1) selon la revendication précédente, dans lequel les moyens de télécommunication (8) comportent des moyens radio, et l'adresse du bloc de traitement est transmise à l'aide desdits moyens radio.

4. Système de mesure (1) selon l'une des revendications 1 à 3, dans lequel l'opération de configuration est déclenchée suite à la détection, par le bloc de traitement (2), de la réception du dispositif d'alimentation électrique (10) dans le logement (17).

5. Système de mesure (1) selon l'une des revendications précédentes, dans lequel le logement (17) du système comprend une zone filetée (19) adaptée pour s'engager par vissage avec un zone filetée (15) correspondante du dispositif d'alimentation (10), le signal d'alimentation électrique reçu étant égal à une différence de potentiel entre ledit filetage et une zone du logement distincte de la zone filetée et destinée à être en contact avec une pièce du dispositif d'alimentation.

6. Système de mesure (1) selon l'une des revendications précédentes, dans lequel l'ensemble de dispositif(s) de mesure (3, 4, 5) comporte au moins un capteur de courant et/ou de tension.

7. Système de mesure (1) selon l'une des revendications précédentes, dans lequel au moins un dispositif de mesure de l'ensemble comporte au moins un premier transformateur de courant adapté pour délivrer au bloc de traitement une mesure d'un courant et un second transformateur de courant adapté pour fournir au bloc de traitement un signal d'alimentation électrique du bloc de traitement généré à l'aide dudit courant.

8. Système de mesure (1) selon l'une des revendications précédentes, comprenant des moyens d'illumination (220) adaptés pour émettre un signal lumineux donné lorsque le bloc de traitement (200) est alimenté par les deuxièmes moyens de réception d'alimentation électrique.

9. Système de mesure (1) selon l'une des revendications précédentes, comprenant un dispositif d'alimentation (10), le dispositif d'alimentation (10) comprenant une tige (12), des moyens de génération d'un signal d'alimentation électrique (20), et, à une extrémité de la tige, un connecteur (15, 16) adapté pour délivrer le signal d'alimentation électrique généré, une partie du dispositif d'alimentation comprenant le connecteur étant adaptée pour être logée de façon ajustée dans le logement (17), de manière à délivrer le signal d'alimentation au système ainsi connecté au connecteur.

10. Système de mesure (1) selon la revendication 9, dans lequel le connecteur (15, 16) comporte un filetage (15), le signal d'alimentation électrique délivré par le connecteur étant égal à une différence de potentiel entre ledit filetage et une zone (16), distincte du filetage, du dispositif d'alimentation, le connecteur étant adapté pour être vissé à l'aide du filetage dans une zone filetée (19) correspondante du logement (17) du bloc de traitement (2).

11. Système de mesure (1) selon la revendication 9 ou 10, dans lequel le dispositif d'alimentation (10) comprend des moyens d'illumination (22) adaptés pour émettre un signal lumineux donné lorsque le connecteur (15, 16) délivre le signal d'alimentation électrique au système (1) connecté et/ou en fonction d'un signal de commande en provenance du système connecté.

12. Système de mesure (1) selon l'une des revendications 9 à 11, dans lequel les moyens de génération d'un signal d'alimentation électrique comprennent une pile (20) et/ou un générateur piézo-électrique actionné par la rotation d'un élément du dispositif.

13. Procédé de configuration d'un système de mesure (1) comprenant un bloc de traitement (2) et un ensemble de dispositif(s) (3, 4, 5) de mesure de grandeurs physiques connecté au bloc de traitement, dans lequel :
le bloc de traitement (2) est adapté pour recueillir des mesures de grandeurs physiques effectuées par ledit ensemble et comporte des moyens de télécommunication (8) d'informations déterminées en fonction desdites mesures, à destination d'un module extérieur,
le bloc de traitement comporte des premiers moyens de réception (61) d'une alimentation électrique du bloc de traitement générée à l'aide d'au moins une grandeur physique mesurée par l'ensemble de dispositif(s) de mesure, le bloc de traitement comportant en outre des deuxièmes moyens de réception (62) d'une alimentation électrique du bloc de traitement, distincts des premiers moyens de réception d'alimentation électrique et comportant un logement (17) pour recevoir un dispositif d'alimentation électrique, le procédé étant **caractérisé en ce qu'**il comporte les étapes consistant à :
- introduire dans le logement du bloc de traitement un dispositif d'alimentation électrique adapté pour fournir un signal d'alimentation électrique au bloc de traitement ;
- suite à la réception d'un dispositif d'alimentation électrique dans ledit logement, mettre en oeuvre, par le bloc de traitement alimenté par les deuxièmes moyens de réception d'alimentation électrique, une opération de configuration du système.

14. Procédé de configuration selon la revendication précédente, dans lequel l'opération de configuration du système (1) comprend la transmission d'une adresse de télécommunication du bloc de traitement (2) à destination du module extérieur.

15. Procédé de configuration selon la revendication 13 ou 14, dans lequel l'opération de configuration est déclenchée suite à la détection, par le bloc de traitement (2), de la réception du dispositif (10) d'alimentation électrique dans le logement (17).

16. Procédé de configuration selon la revendication précédente, dans lequel le système de mesure est conforme l'une des revendications 1 à 12.

## Patentansprüche

1. Messsystem (1), aufweisend einen Verarbeitungsblock (2) und einen Satz von Vorrichtung(en) (3, 4, 5) zum Messen von physikalischen Größen, welcher mit dem Verarbeitungsblock verbunden ist, wobei:
der Verarbeitungsblock geeignet ist, Messungen von physikalischen Größen zu sammeln, welche mittels des Satzes durchgeführt werden,
und Mittel (8) zum Fernübertragen von Informationen an ein externes Modul aufweist, welche abhängig von den Messungen ermittelt werden,
der Verarbeitungsblock erste Mittel zum Empfangen (61) einer Stromversorgung des Verarbeitungsblocks aufweist, welche mithilfe mindestens einer physikalischen Größe erzeugt wird, welche mittels des Satzes von Vorrichtung(en) zum Messen gemessen wird,
wobei das Messsystem **dadurch gekennzeichnet ist, dass** der Verarbeitungsblock ferner zweite Mittel zum Empfangen (62) einer Stromversorgung des Verarbeitungsblocks aufweist, welche sich von den ersten Mitteln zum Empfangen der Stromversorgung unterscheiden,
die zweiten Mittel zum Empfangen der Stromversorgung ein Gehäuse (17) aufweisen, um eine Stromversorgungsvorrichtung (10) aufzunehmen, welche geeignet ist, ein Stromversorgungssignal zu liefern, wobei der Verarbeitungsblock geeignet ist, nach der Aufnahme einer Stromversorgungsvorrichtung in dem Gehäuse einen Vorgang zum Konfigurieren des Systems durchzuführen, wobei der Verarbeitungsblock mittels der zweiten Mittel zum Empfangen der Stromversorgung versorgt wird

2. Messsystem (1) nach dem vorhergehenden Anspruch, wobei der Vorgang zum Konfigurieren des Systems die Übertragung einer Telekommunikationsadresse des Verarbeitungsblocks (2) an das externe Modul aufweist.

3. Messsystem (1) nach dem vorhergehenden Anspruch, wobei die Telekommunikationsmittel (8) Funkmittel aufweisen und die Adresse des Verarbeitungsblocks mithilfe der Funkmittel übertragen wird.

4. Messsystem (1) nach einem der Ansprüche 1 bis 3, wobei der Vorgang zum Konfigurieren mittels des Verarbeitungsblocks (2) nach dem Erfassen der Aufnahme der Stromversorgungsvorrichtung (10) in dem Gehäuse (17) ausgelöst wird.

5. Messsystem (1) nach einem der vorhergehenden Ansprüche, wobei das Gehäuse (17) des Systems einen Gewindebereich (19) aufweist, welche geeignet ist, mittels Verschraubens in Eingriff mit einem der Versorgungsvorrichtung (10) entsprechenden Gewindebereich (15) zugeführt zu werden, wobei das empfangene Versorgungssignal gleich einer Potentialdifferenz zwischen dem Gewinde und einem Bereich des Gehäuses ist, welcher unterschiedlich zu dem Gewindebereich ist und dazu bestimmt ist, in Kontakt mit einem Teil der Versorgungsvorrichtung zu sein.

6. Messsystem (1) nach einem der vorhergehenden Ansprüche, wobei der Satz von Vorrichtung(en) zum Messen (3, 4, 5) mindestens einen Strom- und / oder Spannungssensor aufweist.

7. Messsystem (1) nach einem der vorhergehenden Ansprüche, wobei mindestens eine Vorrichtung zum Messen des Satzes mindestens einen ersten Stromwandler, welcher geeignet ist, dem Verarbeitungsblock eine Messung eines Stroms auszugeben, und einen zweiten Stromwandler aufweist, welcher geeignet ist, dem Verarbeitungsblock ein Stromversorgungssignal des Verarbeitungsblocks zu liefern, welches mithilfe des Stroms erzeugt wird.

8. Messsystem (1) nach einem der vorhergehenden Ansprüche, aufweisend Beleuchtungsmittel (220), welche geeignet sind, ein gegebenes Lichtsignal zu emittieren, wenn der Verarbeitungsblock (200) von den zweiten Mitteln zum Empfangen der Stromversorgung versorgt wird.

9. Messsystem (1) nach einem der vorhergehenden Ansprüche, aufweisend eine Versorgungsvorrichtung (10), wobei die Versorgungsvorrichtung (10) eine Stange (12), Mittel zum Erzeugen eines Stromversorgungssignals (20) und an einem Ende der Stange einen Verbinder (15, 16) aufweist, welcher geeignet ist, das erzeugte Stromversorgungssignal auszugeben, wobei ein Teil der Versorgungsvorrichtung, die den Verbinder aufweist, geeignet ist, fest anliegend in dem Gehäuse (17) aufgenommen zu werden, um dem so mit dem Verbinder verbundenen System das Versorgungssignal zu auszugeben.

10. Messsystem (1) nach Anspruch 9, wobei der Verbinder (15, 16) ein Gewinde (15) aufweist, wobei das mittels des Verbinders gelieferte Stromversorgungssignal gleich einer Potentialdifferenz zwischen dem Gewinde und einem Bereich (16) der Versorgungsvorrichtung ist, welcher unterschiedlich zu dem Gewinde ist, wobei der Verbinder geeignet ist, mithilfe des Gewindes in einem dem Gehäuse (17) entsprechenden Gewindebereich (19) des Verarbeitungsblocks (2) eingeschraubt zu werden.

11. Messsystem (1) nach Anspruch 9 oder 10, wobei die Versorgungsvorrichtung (10) Beleuchtungsmittel (22) aufweist, welche geeignet sind, ein gegebenes Lichtsignal zu emittieren, wenn der Verbinder (15, 16) dem verbundenen System (1) das Stromversorgungssignal ausgibt und / oder in Abhängigkeit mit einem aus dem verbundenen System kommenden Steuersignal.

12. Messsystem (1) nach einem der Ansprüche 9 bis 11, wobei die Mittel zum Erzeugen eines Stromversorgungssignals eine Batterie (20) und / oder einen piezoelektrischen Generator aufweisen, welcher mittels der Drehung eines Elements der Vorrichtung betätigt wird.

13. Verfahren zum Konfigurieren eines Messsystems (1), aufweisend einen Verarbeitungsblock (2) und einen Satz von Vorrichtung(en) (3, 4, 5) zum Messen von physikalischen Größen, welcher mit dem Verarbeitungsblock verbunden ist, wobei:
der Verarbeitungsblock (2) geeignet ist, Messungen von physikalischen Größen zu sammeln, welche mittels des Satzes durchgeführt werden,
und Mittel (8) zum Fernübertragen von Informationen an ein externes Modul aufweist, welche abhängig von den Messungen ermittelt werden,
der Verarbeitungsblock erste Mittel zum Empfangen (61) einer Stromversorgung des Verarbeitungsblocks aufweist, welche mithilfe mindestens einer physikalischen Größe erzeugt wird, welche mittels des Satzes von Vorrichtung (en) zum Messen gemessen wird, wobei der Verarbeitungsblock ferner zweite Mittel zum Empfangen (62) einer Stromversorgung des Verarbeitungsblocks aufweist, welche sich von den ersten Mitteln zum Empfangen der Stromversorgung unterscheiden und ein Gehäuse (17) aufweisen, um eine Stromversorgungsvorrichtung aufzunehmen,
wobei das Verfahren **dadurch gekennzeichnet ist, dass** es die Schritte aufweist, bestehend aus
- Einführen einer Stromversorgungseinrichtung in das Gehäuse des Verarbeitungsblocks, welche geeignet ist, dem Verarbeitungsblock ein Stromversorgungssignal zu liefern,
- nach der Aufnahme einer Stromversorgungsvorrichtung in dem Gehäuse, Implementieren eines Vorgangs zum Konfigurieren des Systems mittels des Verarbeitungsblocks, welcher mittels der zweiten Mittel zum Empfangen der Stromversorgung zugeführt wird.

14. Verfahren zum Konfigurieren nach dem vorhergehenden Anspruch, wobei der Vorgang zum Konfigurieren des Systems die Übertragung einer Telekommunikationsadresse des Verarbeitungsblocks (2) an das externe Modul aufweist.

15. Verfahren zum Konfigurieren nach Anspruch 13 oder 14, wobei der Vorgang zum Konfigurieren mittels des Verarbeitungsblocks (2) nach dem Erfassen der Aufnahme der Stromversorgungsvorrichtung (10) in dem Gehäuse (17) ausgelöst wird.

16. Verfahren zum Konfigurieren nach dem vorhergehenden Anspruch, wobei das Messsystem gemäß einem der Ansprüche 1 bis 12 ist.

## Claims

1. A measurement system (1) including a processing block (2) and a set of devices (3, 4, 5) for measuring physical quantities, connected to the processing block, wherein
the processing block is adapted so as to collect measurements of physical quantities conducted by said set and includes telecommunication means (8) for information determined as a function of said measurement, intended for an external module,
the processing block includes first means (61) for receiving an electric power supply for the processing block generated by means of at least one physical quantity measured by the set of measurement device(s),
the measurement system being **characterized in that** the processing block further includes second means (62) for receiving an electric power supply for the processing block, distinct from the first means for receiving an electric power supply,
said means for receiving an electric power supply including a housing (17) for receiving an electric power supply device (10) adapted so as to provide an electric power supply signal, the processing block being adapted for, following reception of an electric power device in said housing, performing an operation for configuring the system, the processing block being powered by the second means for receiving an electric power supply.

2. The measurement system (1) according to the preceding claim, wherein the operation for configuring the system comprises the transmission of a telecommunications address of the processing block (2) to the external module.

3. The measurement system (1) according to the preceding claim, wherein the telecommunication means (8) include radio means, and the address of the processing block is transmitted by means of said radio means.

4. The measurement system (1) according to one of claims 1 to 3, wherein the configuration operation is triggered following detection by the processing block (2) of the reception of the electric power supply device (10) into the housing (17).

5. The measurement system (1) according to one of the preceding claims, wherein the housing (17) of the system comprises a threaded area (19) adapted for engaging by screwing with a corresponding threaded area (15) of the power supply device (10), the received electric power supply signal being equal to a potential difference between said threading and an area of the housing distinct from the threaded area and intended to be in contact with a part of the power supply device.

6. The measurement system (1) according to one of the preceding claims, wherein the set of measurement devices (3, 4, 5) includes at least one current and/or voltage sensor.

7. The measurement system (1) according to one of the preceding claims, wherein at least one measurement device of the set includes at least one first current transformer adapted for delivering to the processing block a measurement of a current and a second current transformer adapted for providing the processing block with an electric power supply signal for the processing block generated by means of said current.

8. The measurement system (1) according to one of the preceding claims, comprising illumination means (220) adapted for emitting a given light signal when the processing block (200) is powered by the second means for receiving an electric power supply.

9. The measurement system (1) according to one of the preceding claims, comprising a power supply device (10), the power supply device (10) comprising a rod (12), means for generating a power supply signal (20) and at one end of the rod, a connector (15, 16) adapted for delivering the generated electric power supply signal, a portion of the power supply device comprising the connector being adapted so as to be snugly housed in the housing (17), so as to deliver the power supply signal to the system thereby connected to the connector.

10. measurement system (1) according to claim 9, wherein the connector (15, 16) includes a threading (15), the electric power supply signal delivered by the connector being equal to a potential difference between said threading and an area (16) distinct from the threading of the power supply device, the connector being adapted so as to be screwed on by means of the threading into a corresponding threaded area (19) of the housing (17) of the processing block (2).

11. The measurement system (1) according to claim 9 or 10, wherein the power supply device (10) comprises illumination means (22) adapted for emitting a given light signal when the connector (15, 16) delivers the electric power supply signal to the connected system (1) and/or as a function of the control signal from the connected system.

12. The measurement system (1) according to one of claims 9 to 11, wherein the means for generating an electric power supply signal comprise a battery cell (20) and/or a piezo-electric generator actuated by rotation of an element of the device.

13. A method for configuring a measurement system (1) comprising a processing block (2) and a set of devices (3, 4, 5) for measuring physical quantities connected to the processing block, wherein:
the processing block (2) is adapted for collecting measurements of physical quantities conducted by said set and includes telecommunication means (8) for information determined as a function of said measurements, intended for an external module,
the processing block includes first means (61) for receiving an electric power supply for the processing block, generated by means of at least one physical quantity measured by the set of measurement device(s), the processing block further including second means (62) for receiving an electric power supply for the processing block, distinct from the first means for receiving an electric power supply and including a housing (17) for receiving an electric power supply device, the method being **characterized in that** it includes the steps:
- introducing into the housing of the processing block an electric power supply device adapted for providing an electric power supply signal to the processing block;
- following reception of an electric power supply device in said housing, applying, by the processing block powered by the second means for receiving an electric power supply, an operation for configuring the system.

14. A configuration method according to the preceding claim, wherein the operation for configuring the system (1) comprises the transmission of a telecommunications address of the processing block (2) intended for the external module.

15. The configuration method according to claim 13 or 14, wherein the configuration operation is triggered following the detection by the processing block (2) of the reception of the electric power supply device (10) in the housing (17).

16. The configuration method according to the preceding claim, wherein the measurement system is compliant withone of claims 1 to 12.
